(19) Europäisches Patentamt
European Patent Office
Office européen des brevets

(11) Veröffentlichungsnummer: **0 413 190 A2**

(12) # EUROPÄISCHE PATENTANMELDUNG

(21) Anmeldenummer: **90114638.1**

(22) Anmeldetag: **31.07.90**

(51) Int. Cl.[5]: **C08G 64/06**, C08L 69/00, C08K 3/00, C08K 5/00

(30) Priorität: **12.08.89 DE 3926768**

(43) Veröffentlichungstag der Anmeldung: **20.02.91 Patentblatt 91/08**

(84) Benannte Vertragsstaaten: **BE DE ES FR GB IT NL**

(71) Anmelder: **BAYER AG**

**D-5090 Leverkusen 1 Bayerwerk(DE)**

(72) Erfinder: **Serini, Volker, Dr.**
**Sebastian-Kneipp-Weg 2**
**D-4150 Krefeld(DE)**
Erfinder: **Freitag, Dieter, Dr.**
**Hasenheide 10**
**D-4150 Krefeld 1(DE)**
Erfinder: **Westeppe, Uwe, Dr.**
**Vogelskamp 72**
**D-4020 Mettmann(DE)**
Erfinder: **Idel, Karsten-Josef, Dr.**
**Am Schwarzkamp 38**
**D-4150 Krefeld(DE)**
Erfinder: **Grigo, Ulrich, Dr.**
**Michelsheide 9**
**D-4152 Kempen 3(DE)**

(54) **Polycarbonate aus n-Alkyl-substituierten Cyclohexylidenbisphenolen.**

(57) Aus aromatischen Polycarbonaten mit mittleren Molekulargewichten $\overline{M}$ w von 10.000 bis 80. 000, die bifunktionelle Carbonatstruktureinheiten der Formel (I)

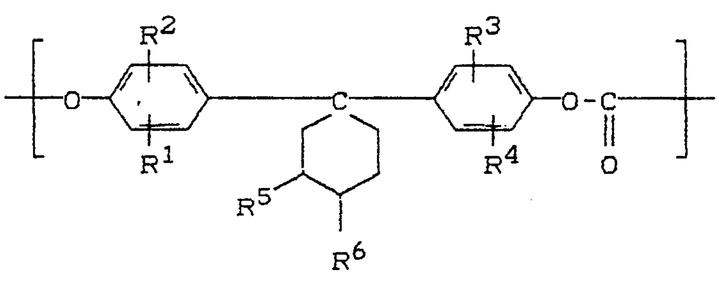

(I)

mit
$R^1$, $R^2$, $R^3$, $R^4$ unabhängig voneinander Wasserstoff, $C_1$ bis $C_{12}$-Kohlenwasserstoffrest, Halogen
$R^5$, $R^6$ Wasserstoff oder $C_1$ bis $C_5$-n-Alkylrest, wobei jeweils nur einer der Reste $R^5$ und $R^6$ ein $C_1$ bis $C_5$-n-Alkylrest ist,
in Mengen von 100 bis 10 Mol-%, bezogen auf die Gesamtmenge von difunktionellen Carbonatstruktureinheiten im Polycarbonat, können durch thermoplastische Verarbeitung zu Formkörper hergestellt werden.



Xerox Copy Centre

# POLYCARBONATE AUS N-ALKYL-SUBSTITUIERTEN CYCLOHEXYLIDENBISPHENOLEN

Gegenstand der Erfindung ist die Herstellung von Formkörpern aus aromatischen Polycarbonaten mit mittleren Molekulargewichten $\overline{M}$ w von 10.000 bis 80.000, bevorzugt von 15.000 bis 70.000, besonders bevorzugt von 18.000 bis 60.000 und insbesondere von 20.000 bis 40.000, die bifunktionelle Carbonatstruktureinheiten der Formel (I)

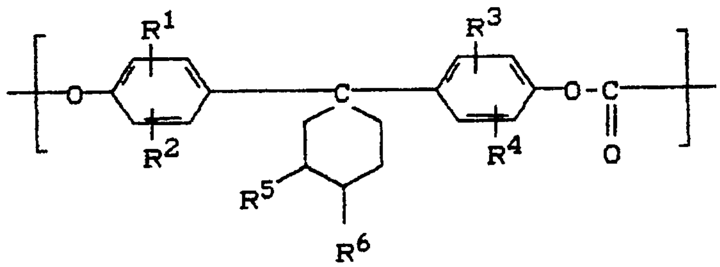

(I)

mit

$R^1$, $R^2$, $R^3$, $R^4$ unabhängig voneinander Wasserstoff, $C_1$ bis $C_{12}$-Kohlenwasserstoffrest oder Halogen und mit

$R^5$, $R^6$ Wasserstoff oder $C_1$ bis $C_5$-n-Alkylrest, wobei jeweils nur einer der Reste $R^5$ und $R^6$ ein $C_1$ bis $C_5$-n-Alkylrest ist,

in Mengen von 100 bis 10 Mol-%, bevorzugt 100 bis 20 Mol-%, besonders bevorzugt 100 bis 40 Mol-%, ganz besonders bevorzugt 100-70 Mol-% und insbesondere 100 Mol-%, bezogen auf die Gesamtmenge von difunktionellen Carbonatstruktureinheiten im Polycarbonat, enthalten, durch thermoplastische Verarbeitung.

In den japanischen Patentschriften 61 062 039, 61 062 040 und 61 105 550 werden Polycarbonate beschrieben, die teilweise oder ganz aus Struktureinheiten der Formel (IA) bestehen, mit

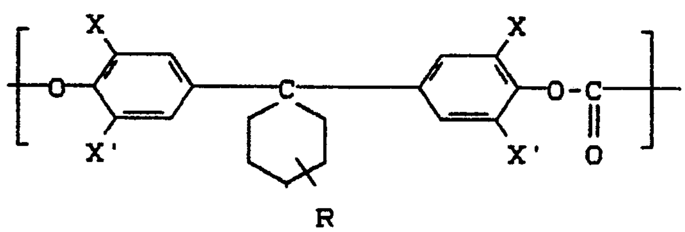

(IA)

X und X′ gleich Wasserstoff, Halogen oder Methyl und mit

R gleich Wasserstoff, Halogen, OH, COOH, Acetyl oder $C_1$-$C_4$-Alkyl (in JP 61 062 040 $C_1$-$C_5$-Alkyl).

Unter Formel (IA) fällt auch ein Teil der unter Formel (I) fallenden Struktureinheiten. Die in den obengenannten Japanischen Patentschriften genannten Polycarbonate dienen als Binderpolymere in ladungstransportierenden Schichten elektrofotografischer Fotorezeptoren. Die Verarbeitung dieser Polycarbonate erfolgt durch Lösen in einem organischem Lösemittel, wie z.B. Methylenchlorid, Vergießen der so erhaltenen Polycarbonatlösung nach Einbringen ladungstransportierender Substanzen und Verdampfen des organischen Lösemittels unter Bildung einer ladungstransportierenden Schicht. Eine Verwendung der beschriebenen Polycarbonate zur thermoplastischen Verarbeitung zu Formkörpern wird in den obengenannten Japanischen Patentschriften und auch anderswo nicht beschrieben. Eine solche Verwendung ist für den Fachmann auch nicht naheliegend, da schon Polycarbonate auf Basis von am Cyclohexylidenring unsubstituierten Bisphenolen, wie z.B. 1,1-Bis-(4-hydroxyphenyl)-cyclohexan, aufgrund ihrer hohen Schmelzviskosität sowie Vernetzungs- und Zersetzungsempfindlichkeit, schwer aus der Schmelze zu technisch brauchbaren Formkörpern verarbeitet werden können. Es war zu erwarten, daß eine zusätzliche Methylsubstitution am Cyclohexylidenring, wie sie in Formel (I) beschrieben ist, eine technisch akzeptable thermoplastische Verarbeitung nicht mehr zulassen würde.

Es wurde nun überraschend gefunden, daß die thermoplastische Verarbeitung der erfindungsgemäß zu verwendenden Polycarbonate doch möglich ist und die erhältlichen Formkörper gute Eigenschaften zeigen.

Die Schmelze der erfindungsgemäß zu verwendenden Polycarbonate fließt überraschend gut und ist vernetzungs- und zersetzungsstabil.

Den Carbonatstruktureinheiten der Formel (I) liegen Biphenole der Formel (II)

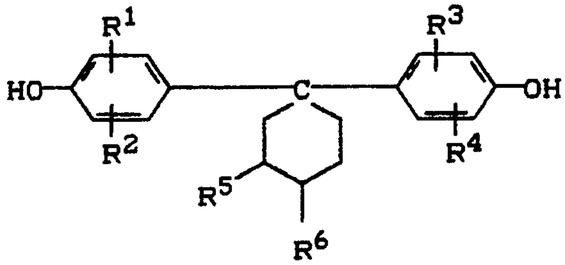

(II)

zugrunde, in der

$R^1$, $R^2$, $R^3$, $R^4$, $R^5$ und $R^6$ die gleiche Bedeutung wie in Formel (I) haben.

In den Formeln (I) und (II) sind $R^1$, $R^2$, $R^3$ und $R^4$ bevorzugt Wasserstoff, Methyl, Ethyl, Phenyl, Cyclohexyl, Chlor und Brom, besonders bevorzugt jedoch Wasserstoff, Methyl und Brom und insbesondere Wasserstoff.

Wenn mehr als einer der Reste $R^1$, $R^2$, $R^3$ und $R^4$ ungleich Wasserstoff ist, werden gleiche Substituenten bevorzugt.

Wenn zwei der Reste $R^1$, $R^2$, $R^3$ und $R^4$ ungleich Wasserstoff sind, wird die o,o′-Substitution, bezogen auf die Carbonatgruppen (Formel (I)) bzw die phenolischen OH-Gruppen (Formel (II)), bevorzugt. Wenn alle vier Reste $R^1$, $R^2$, $R^3$ und $R^4$ ungleich Wasserstoff sind, wird die o,o,o′,o′-Substitution, bezogen wie vor, bevorzugt.

In den Formeln (I) und(II) können die Reste $R^5$ oder $R^6$ $C_1$-$C_5$-n-Alkylreste, wie Methyl, Ethyl, n-Propyl, n-Butyl und n-Pentyl, bevorzugt jedoch Methyl und Ethyl bedeuten. Bevorzugt ist der Rest $R^5$ in den Formeln (I) und (II) der $C_1$-$C_5$-n-Alkylrest.

Beispiele für Bisphenole der Formel (II) sind:

1,1-Bis-(4-hydroxyphenyl )-4-methyl-cyclohexan 1,1-Bis-(3-methyl-4-hydroxyphenyl )-4-methylcyclohexan
1,1-Bis-(3,5-dimethyl-4-hydroxyphenyl)-4-methylcyclohexan
1,1-Bis-(3-chlor-4-hydroxyphenyl)-4-methylcyclohexan
1,1-Bis-(3,5-dichlor-4-hydroxyphenyl)-4-methylcyclohexan
1,1-Bis-(3,5-dibrom-4-hydroxyphenyl)-4-methylcyclohexan
1,1-Bis-(3-phenyl-4-hydroxyphenyl)-4-methylcyclohexan
1,1-Bis-(3,5-diethyl-4-hydroxyphenyl)-4-methylcyclohexan.
1 1-Bis-(4-hydroxyphenyl)-3-methyl-cyclohexan 1,1-Bis-(3-methyl-4-hydroxyphenyl)-3-methylcyclohexan
1,1-Bis-(3,5-dimethyl-4-hydroxyphenyl)-3-methylcyclohexan
1,1-Bis-(3-chlor-4-hydroxyphenyl)-3-methylcyclohexan
1,1-Bis-(3,5-dichlor-4-hydroxyphenyl)-3-methylcyclohexan
1,1-Bis-(3,5-dibrom-4-hydroxyphenyl )-3-methylcyclohexan
1,1-Bis-(3-phenyl-4-hydroxyphenyl)-3-methylcyclohexan
1,1-Bis-(3,5-diethyl-4-hydroxyphenyl)-3-methylcyclohexan
1,1-Bis-(4-hydroxyphenyl)-3-ethyl-cyclohexan
1,1-Bis-(4-hydroxyphenyl)-4-ethyl-cyclohexan

Bevorzugte Bisphenole sind insbesondere

1,1-Bis-(4-hydroxyphenyl)-3-methylcyclohexan
1,1-Bis-(3,5-dimethyl-4-hydroxyphenyl)-3-methylcyclohexan und
1 ,1-Bis-(3,5-dibrom-4-hydroxyphenyl)-3-methylcyclohexan.

Besonders bevorzugt ist das

1,1-Bis-(4-hydroxyphenyl)-3-methylcyclohexan.

Bisphenole der Formel (II) können aus Cyclohexanonen der Formel (III)

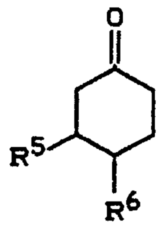

(III)

und Phenolen der Formeln (IV) und (IVa)

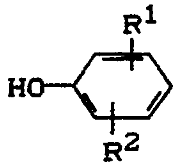

(IV)

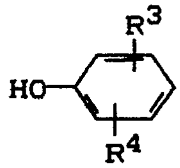

(IVa)

in denen $R^1$, $R^2$, $R^3$, $R^4$, $R^5$ und $R^6$ die oben angegebene Bedeutung haben, durch Umsetzung bei etwa 0-100 °C in Anwesenheit eines sauren Katalysators - bevorzugt HCl oder saurer Ionenaustauscher - und gegebenenfalls eines schwefelhaltigen Cokatalysators, wie zB 3-Mercaptopropionsäure - hergestellt werden.

Die erfindungsgemäß zu verwendenden Polycarbonate enthalten neben den Carbonatstruktureinheiten der Formel (I) jeweils zu 100 Mol-% komplementäre Mengen an anderen difunktionellen Carbonatstruktureinheiten, beispielsweise solche der Formel (V), denen Bisphenole der Formel (VI) zugrundeliegen.

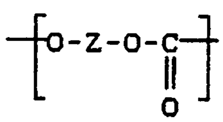

(V)

HO-Z-OH (VI)

Bisphenole der Formel (VI) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (VI) sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,

α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VI) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Als Kettenabbrecher zur Regelung des Molekulargewichts dienen in bekannter Weise monofunktionelle Verbindungen in üblichen Konzentrationen. Geeignete Verbindungen sind z.B. sekundäre Amine, Phenole und Säurechloride. Bevorzugt werden Phenole, z.B. tert.-Butylphenole oder andere Alkyl-substituierte Phenole. Zur Regelung des Molekulargewichts sind insbesondere kleine Mengen Phenole der Formel (VII) geeignet

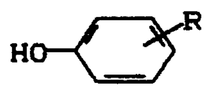

(VII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %.

Einige besonders geeignete Phenole sind Phenol, p-tert.-Butylphenol, Hydroxydiphenyl, p-Cumylphenol und insbesondere p-3,5-Dimethylheptylphenol und m- und p-1,1,3,3-Tetramethylbutylphenol. Ganz besonders bevorzugt ist das p-1,1,3,3-Tetramethylbutylphenol. Die Kettenabbrecher werden im allgemeinen in Mengen von 0,1 bis 10, bevorzugt 0,5 bis 8 Mol-%, bezogen auf eingesetzte Diphenole, eingesetzt.

Unter Polycarbonaten, die erfindungsgemäß Verwendung zur thermoplastischen Verarbeitung zu Formkörpern finden, werden auch beliebige Mischungen von mindestens zwei Polycarbonaten verstanden, vorausgesetzt, sie genügen den eingangs gestellten Anforderungen an die Art und das

Verhältnis der bivalenten Carbonatstruktureinheiten der Formeln (I) und (V) und an das mittlere Molekulargewicht $\overline{M}_w$. Bevorzugt sind jedoch Polycarbonate, deren Zusammensetzung durch die Synthese festgelegt ist, die also nicht durch nachträgliches Mischen erhältlich sind.

Die erfindungsgemäß zu verwendenden Polycarbonate können nach dem Phasengrenzflächenverfahren (vgl. H. Schnell, "Chemistry and Physics of Polycarbonates", Polymer Reviews, Vol IX, Seite 33 ff., Interscience Publ., 1964) in an sich bekannter Weise hergestellt werden.

Hierbei werden die Diphenole der Formel (II) in wäßrig alkalischer Phase gelöst. Zur Herstellung von Co-Polycarbonaten mit anderen Diphenolen werden Gemische von Diphenolen der Formel (II) und den anderen Diphenolen, beispielsweise denen der Formel (VI), eingesetzt. Zur Regulierung des Molekulargewichtes können Kettenabbrecher z.B. der Formel (VII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im allgemeinen zwischen 0°C und 40°C.

Neben den einzusetzenden Diphenolen der Formel (II) sowie den anderen Diphenolen der Formel (VI) können auch deren Mono- und/oder Bis-chlorkohlensäureester mitverwendet werden, wobei diese in organischen Lösungsmitteln gelöst zugegeben werden. Die Menge an Kettenabbrechern richtet sich dann nach Molen Diphenolat-Struktureinheiten von (II) und gegebenenfalls von den anderen Diphenolat-Struktureinheiten wie beispielsweise von (VI); ebenso kann bei Einsatz von Chlorkohlensäureestern die Phosgenmenge in bekannter Weise entsprechend reduziert werden.

Als organische Phase für die Phasengrenzflächenpolykondensation sowie als organische Lösungsmittel für die Lösung der Kettenabbrecher sowie gegebenenfalls für die Chlorkohlensäureester können beispielsweise chlorierte Kohlenwasserstoffe, wie Chloroform, Dichlorethan, Di-und Tetrachlorethylen, Tetrachlorethan, Methylenchlorid, Chlorbenzol und Dichlorbenzol, aber auch nicht chlorierte Kohlenwasserstoffe, wie z.B. Toluol und Xylol, sowie Mischungen dieser Lösungsmittel, insbesondere Mischungen aus Methylenchlorid und Chlorbenzol dienen. Gegebenenfalls können die verwendeten Kettenabbrecher im gleichen Solvens gelöst werden.

Als organische Phase für die Phasengrenzflächenpolykondensation dienen beispielsweise Methylenchlorid, Chlorbenzol oder Toluol sowie Mischungen aus Methylenchlorid und Chlorbenzol.

Als wäßrige alkalische Phase dient beispielsweise wäßrige NaOH-Lösung oder KOH-Lösung.

Die Herstellung der erfindungsgemäß zu verwendenden Polycarbonate nach dem Phasengrenzflächenverfahren kann in üblicher Weise durch Katalysatoren wie tertiäre Amine und Phasentransferkatalysatoren, insbesondere tertiäre Saliphatische Amine wie z.B. Tributylamin, Triethylamin, N-Ethyl-piperidin und insbesondere quartäre Ammonium-und Phosphoniumverbindungen und Kronenether, wie z.B. Tetrabutylammoniumbromid und Triphenylbenzylphosphoniumbromid katalysiert werden; die Katalysatoren werden im allgemeinen in Mengen von 0,05 bis 30 Mol-%, bezogen auf Mole an eingesetzten Diphenolen, eingesetzt. Die Katalysatoren werden im allgemeinen vor Beginn der Phosgenierung oder während oder auch nach der Phosgenierung zugesetzt.

Die erfindungsgemäß zu verwendenden Polycarbonate werden in bekannter Weise, aus dem primären Reaktionsprodukt abgetrennt, z.B. indem man die bei der Phasengrenzflächenpolykondensation erhaltene organische Phase mit dem darin gelösten Polycarbonat abtrennt, neutral und elektrolytfrei wäscht und dann das Polycarbonat beispielsweise mit einen Eindampfextruder als Granulat, oder durch Fällung mit Hilfe eines Nichtlösers und anschließende Trocknung oder durch Sprühverdampfung als Pulver bzw. als Pellets gewinnt.

Den erfindungsgemäß zu verwendenden Polycarbonaten können vor oder während ihrer Verarbeitung zu Formkörpern die für thermoplastische Polycarbonate üblichen Additive wie z.B. Stabilisatoren, Entformungsmittel, Pigmente, Brandschutz-Additive, Antistatika, Leitfähigkeitszusätze, Füllstoffe und Verstärkungsstoffe in den üblichen Mengen zugesetzt werden.

Als Brandschutz-Additive kommen in Betracht:

1. Alkali-, Erdalkali- und Ammoniumsalze von aliphatischen und aromatischen Sulfonsäuren, Carbonsäuren und Phosphonsäuren. Diese können in mannigfacher Weise substituiert sein, z.B. durch F, Cl, Br, Alkyl. Solche salzartigen Brandschutzmittel können auch oligomer und polymer sein. Salzartige Brandschutzmittel sind u.a. in folgenden Patentanmeldungen beschrieben:
DE-OS 1694640, 1930257, 2049358, 2212987, 2149311, 2253072, 2703710, 2458527, 2458968, 2460786, 2460787, 2460788, 2460935, 2460937, 2460944, 2460945, 2460946, 2461063, 2461077, 2461144, 2461145, 2461146, 2644114, 2645415, 2646120, 2647271, 2648128, 2648131, 2653327, 2744015, 2744016, 2744016, 2744017, 2744018, 2745592, 2948871, 2948439, 3002122.

2. Organische Halogenverbindungen, gegebenenfalls in Kombination mit Synergisten, z.B. halogenierte Aromaten, Solche Substanzen sind u.a. in folgenden Patentanmeldungen beschrieben:
DE-OS 2631756, JA 51-119059, DE-OS 3342636, EP-A 31959, DE-OS 3010375, 2631756.

3. Halogenierte Phthalimide, Phthalimidsulfonate:
DE-OS 2703710, 3203905, 3322057, 3337857, 3023818.

4. Salze von halogenhaltigen Komplexsäuren, z.B. Kryolith, Salze der Tetrafluoroborsäure, der Fluorokieselsäure, beschrieben u.a. in DE-OS 2149311, 3023818.

5. Teilweise oder ganz fluorierte Polyolefine, z.B. beschrieben in DE-OS 2535262, 2915563, 2948439, 3023818.

6. Sulfonamide, Disulfonamide und Salze davon: EP-A 71125, 14322, WO 86/4911.

7. Elementarer Schwefel, roter Phosphor: DE-OS 2435508, 2355211

8. Ferrocen oder dessen Derivate: DE-OS 2644437.

9. Diphenylsulfon: DE-OS 2129204.

10. Nickel-Salze: DE-OS 1918216.

11. Polyphenylensulfid: DE-OS 2503336, EP-A 87038.

12. Alkali- und Erdalkali- sowie Zinksalze von Salzsäure, Schwefelsäure, Phosphorsäure, Salpetersäure, Schwefelwasserstoff, Borsäure sowie auch saure Salze dieser Säuren: WO 87/542, US 4408005, EP-A 174684.

13. Siloxane: DE-OS 2535261.

Als Comonomere, die dem Brandschutz dienen können, sind beschrieben:

1. Chloriertes und bromiertes BPA sowie 4,4′-Dihydroxy-diphenylsulfid: EP-A 31958, 61060.
2. Siloxanblöcke: DE-OS 3334782.
3. Dihydroxy-diphenylsulfone: US 3912688.
4. Sulfoanilid-Endgruppen: EP-A 82483.

Die Brandschutzmaßnahmen können einzeln oder gemeinsam zur Anwendung kommen.

Die Brandschutz-Additive werden einzeln oder zu mehreren gemeinsam vorzugsweise in Extrudern oder Knetern in die Polycarbonate, die Diphenole der Formel (II) einkondensiert enthalten, eingearbeitet. In vielen Fällen können die Brandschutzmittel den Polycarbonaten schon während der Herstellung oder auch schon den Ausgangsstoffen zugesetzt werden. Weiterhin können die Brandschutzmittel auch Lösungen der Polycarbonate zugegeben werden mit anschließender Einengung der Lösungen zur Trockne. Die Brandschutzmitteladditive werden bevorzugt in Mengen von 0,001 bis 50 Gew-%, die Brandschutz-Comonomeren bevorzugt in Mengen von 0,1 bis 50 Mol-% verwendet.

Im einzelnen können beispielsweise Graphit, Ruß, Metallfasern, Metallpulver, Kieselgur, Quarz, Kaolin, Tone, $CaF_2$, $CaCO_3$, Aluminiumoxide, Glasfasern, C-Fasern, Keramikfasern und anorganische Pigmente eingesetzt werden, sowie als Entformungsmittel beispielsweise Ester mehrwertiger Alkohole mit langkettigen Carbonsäuren wie Glycerinstearate, Pentaerythrittetrastearat und Trimethylolpropantristearat.

Die erfindungsgemäß zu verwendenden Polycarbonate können nach den Regeln der thermoplastischen Verarbeitung, so z.B. durch Spritzguß, Extrusion, Blasverformen, Rotationsguß, Warmverpressen oder Tiefziehen thermoplastisch zu Formkörpern verarbeitet werden, wobei man beispielsweise die oben genannten Additive zufügen kann. Unter Formkörpern werden z.B. spritzgegossene Formkörper unterschiedlichster Geometrie, extrudierte Formkörper, wie Profile, Rohre, Platten, Fasern und Folien, blasverformte Körper, wie Flaschen, Behälter und Beleuchtungskörper, sowie tiefgezogene Formkörper verstanden.

Formkörper aus den erfindungsgemäß zu verwendenden Polycarbonaten sind z.B. im Elektrosektor sowie im Bausektor mit Vorteil einsetzbar, wenn hohe Wärmeformbeständigkeit bei gleichzeitig großer Farbhelligkeit gefordert ist. Sie sind weiterhin mit Vorteil im Bereich der optischen Datenspeicherung einsetzbar, wenn hohe Wärmestandfestigkeit und hohe optische Qualität erforderlich ist, wie z.B. bei wiederbeschreibbaren optischen Speicherplatten.

## Beispiel 1

Polycarbonat aus 1,1-Bis-(4-hydroxyphenyl)-3-methylcyclohexan

In 3 l Wasser wurden 184 g (4,6 Mol) NaOH und 282 g (1 Mol) 1,1-Bis-(4-hydroxyphenyl)-3-methylcyclohexan gelöst. Dazu wurden 3 l Methylenchlorid mit darin gelösten 3,1 g (0,033 Mol) Phenol gegeben. Unter intensivem Rühren wurden dann bei 25° C 148,5 g (1,5 Mol) Phosgen innerhalb von 30 Minuten in das Gemisch eingeleitet. Nach Zugabe von 1,13 g (0,01 Mol) N-Ethylpiperidin wurde das Gemisch 60 Minuten bei 25° C intensiv gerührt. Die bisphenolatfreie alkalisch-wäßrige Phase wurde abgetrennt; die organische Phase nach dem Ansäuern mit verdünnter Phosphorsäure mit Wasser elektrolytfrei gewaschen und eingedampft. Das erhaltene Polycarbonat wurde dann durch Trocknung vom restlichen Methylenchlorid befreit. Es war farblos und zeigte eine relative Viskosität $\eta$rel = 1,304 (gemessen in Methylenchlorid, bei c = 5 g/l und 25° C).

## Beispiel 2

Copolymerisat aus Bisphenol-A und 1,1-Bis-(4-hydroxyphenyl)-3-methyl-cyclohexan im Molverhältnis 1:1.

Beispiel 1 wurde wiederholt mit dem Unterschied, daß die Hälfte des dort eingesetzten Bisphenols durch 114 g (0,5 Mol) 2,2-Bis-(4-hydroxyphenyl)-propan (Bisphenol A) ersetzt wurde.

Das erhaltene Polycarbonat hatte eine relative Viskosität $\eta$rel = 1,306 (gemessen in Methylenchlorid bei 25° C und c = 5 g/l).

## Beispiel 3

Polycarbonat aus 1,1-Bis-(4-hydroxyphenyl)-4-methylcyclohexan

Beispiel 1 wurde wiederholt mit dem Unterschied, daß statt des dort eingesetzten Bisphenols 282 g (1 Mol) 1,1-Bis-(4-hydroxyphenyl)-4-methylcyclohexan verwendet wurden. Das erhaltene Polycarbonat hatte eine relative Viskosität $\eta_{rel}$ = 1,319 (gemessen in Methylenchlorid bei c = 5 g/l und 25° C).

Beispiel 4

Beispiel 1 wurde wiederholt, aber 10 Mol-% des Diphenols durch 3,3′,5,5′-Tetrabrom-bisphenol A ersetzt. Das erhaltene Polycarbonat zeigte $\eta$rel von 1,302.

Beispiele 5 - 37

Die Ergebnisse der Brandprüfungen der mit Brandschutzmitteln ausgerüsteten Polycarbonate sind in Tabelle 1 zusammengestellt. Die Brandschutzmittel wurden mit einem Doppelwellenextruder ZSK 32 der Firma Werner & Pfleiderer eingearbeitet.

Das Brandverhalten wurde anhand des $O_2$-Index gemäß ASTM-D 2863-70 beurteilt. Für diese Untersuchungen wurden Prüfstäbe der Abmessungen 80 x 6 x 3 mm durch Spritzgießen hergestellt.

Tabelle 1

| Beispiel | Polycarbonat von Beispiel | Brandschutzmittel | Menge, % | $O_2$-Index, % |
|---|---|---|---|---|
| 5 (Vergleich) | 1 | - | - | 23,9 |
| 6 (Vergleich) | 3 | - | - | 24,5 |
| 7 | 4 | - | - | 28,6 |
| 8 | 1 | K-p-Toluolsulfonat | 0,2 | 28,3 |
| 9 | 3 | " | " | 28,5 |
| 10 | 4 | " | " | 32,9 |
| | | " | " | 31,3 |
| 11 | 1 | Perfluor-n-butan-K-sulfonat | " | 29,6 |
| 12 | 3 | $CF_3-CO_2-Ca-O_2C-CF_3$ | " | 28,5 |
| 13 | 1 | 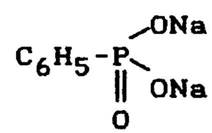 | " | 29,7 |
| 14 | 1 | 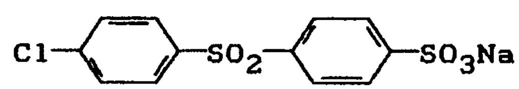 | " | 30,3 |
| 15 | 1 | Decabromdiphenyl | 5 | 29,0 |
| 16 | 3 | " | 5 | 29,3 |
| 17 | 1 | " + $Sb_2O_3$ | 5 + 2 | 31,7 |

**Tabelle 1** (Fortsetzung)

| Beispiel | Polycarbonat von Beispiel | Brandschutzmittel | Menge, % | $O_2$-Index, % |
|---|---|---|---|---|
| 18 | 1 | 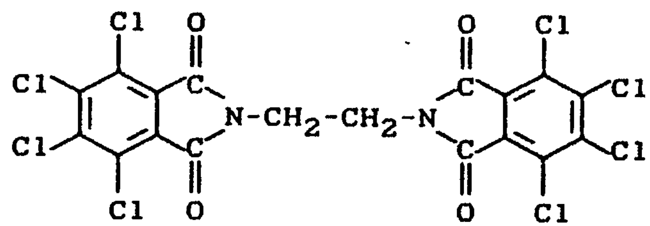 | 3 | 30,2 |
| 19 | 1 | $Na_3AlF_6$ | 0,2 | 29,6 |
| 20 | 3 | " + Polytetrafluorethylen wie Bsp. 21 | 0,2 + 0,1 | 33,1 |
| 21 | 1 | Polytetrafluorethylen, Hostaflon 1740 der Hoechst AG | 0,2 | 27,0 |
| 22 | 1 | 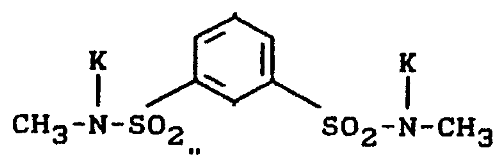 | 0,4 | 29,6 |
| 23 | 1 | Schwefel | 5 | 30,7 |
| 24 | 1 | roter Phosphor, mittlerer Teilchen-ø 35 µm | 5 | 36,1 |

**Tabelle 1** (Fortsetzung)

| Beispiel | Polycarbonat von Beispiel | Brandschutzmittel | Menge, % | $O_2$-Index, % |
|---|---|---|---|---|
| 25 | 1 | Ferrocen, mittlere Teilchen-ø 28 µm | 0,1 | 27,5 |
| 26 | 1 | Diphenylsulfon | 3 | 26,9 |
| 27 | 1 | Ni-Laurinat | 0,02 | 27,4 |
| 28 | 1 | Polyphenylensulfid gemäß EP-A 171 021 der Schmelzeviskosität 53 Pa.s bei der Scherrate 100 Pa bei 306°C | 10 | 31,5 |
| 29 | 1 | NaCl | 0,3 | 27,8 |
| 30 | 1 | $K_2HPO_4$ | 0,2 | 28,5 |
| | | $Li_2SO_4$ | 0,2 | 27,4 |
| 31 | 1 | $NaNO_3$ | 0,2 | 30,2 |
| 32 | 1 | ZnS | 0,5 | 28,6 |
| 33 | 1 | NaHS | 0,2 | 27,0 |
| 34 | 1 | $Na_3B_4O_7$ | 0,2 | 28,6 |
| 35 | 3 | Polydimethylsiloxan der Viskosität 170 000 mPa.s | 7 | 29,2 |

**Tabelle 1** (Fortsetzung)

| Beispiel | Polycarbonat von Beispiel | Brandschutzmittel | Menge, % | $O_2$-Index, % |
|---|---|---|---|---|
| 36 | 1 | Polysiloxan-Block-Co-Polycarbonat von Beispiel 3 der DE-OS 3 334 782 | 50 | 29,0 |
| 37 | 3 | K-Salz der Perfluor-n-butansulfonsäure + Polytetrafluorethylen (Beispiel 21) | 0,2 + 0,1 | 33,4 |

**Ansprüche**

1. Verwendung von aromatischen Polycarbonaten mit mittleren Molekulargewichten $\overline{M}$ w von 10.000 bis 80.000, die bifunktionelle Carbonatstruktureinheiten der Formel (I)

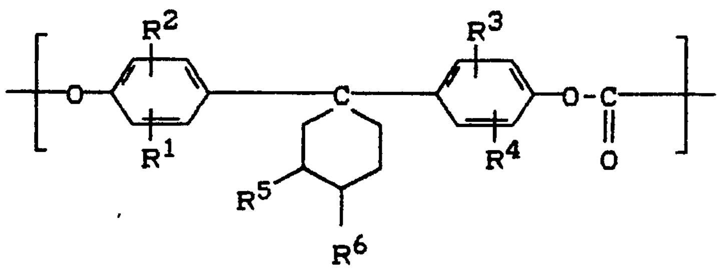

(I)

mit

$R^1$, $R^2$, $R^3$, $R^4$ unabhängig voneinander Wasserstoff, $C_1$ bis $C_{12}$-Kohlenwasserstoffrest, Halogen

$R^5$, $R^6$ Wasserstoff oder $C_1$ bis $C_5$-n-Alkylrest, wobei jeweils nur einer der Reste $R^5$ und $R^6$ ein $C_1$ bis $C_5$-n-Alkylrest ist,

in Mengen von 100 bis 10 Mol-%, bezogen auf die Gesamtmenge von difunktionellen Carbonatstruktureinheiten im Polycarbonat, enthalten, zur thermoplastischen Verarbeitung zu Formkörpern.

2. Verwendung von aromatischen Polycarbonaten des Anspruchs 1, die mit Additiven und/oder Comonomeren brandwidrig ausgerüstet sind, zur thermoplastischen Verarbeitung zu Formkörpern.

3. Verfahren zur Herstellung von Formkörpern, dadurch gekennzeichnet, daß man ein aromatisches Polycarbonat des Anspruchs 1 thermoplastisch verformt.

4. Formkörper aus den aromatischen Polycarbonaten des Anspruchs 1.